# EUROPÄISCHE PATENTSCHRIFT

(11) **EP 3 381 725 B1**
(45) Veröffentlichungstag und Bekanntmachung des Hinweises auf die Patenterteilung: **28.08.2019**
(21) Anmeldenummer: 18160472.9
(22) Anmeldetag: 07.03.2018
(51) Int. Cl.: B60H 1/34, F24F 13/16, B64D 13/00, F24F 13/15

(54) **LUFTAUSSTRÖMER**
AIR NOZZLE
AÉRATEUR

(30) Priorität: 30.03.2017 DE 102017106853
(43) Veröffentlichungstag der Anmeldung: 03.10.2018
(73) Patentinhaber: Dr. Schneider Kunststoffwerke GmbH, 96317 Kronach-Neuses (DE)
(72) Erfinder: ENDRES, Gerhard, 95336 Mainleus Bayern (DE)

(56) Entgegenhaltungen:
- DE-A1-102013 101 887
- DE-A1-102016 203 139
- DE-C1- 3 719 837
- ES-U- 1 047 777
- JP-A- 2007 118 884
- KR-U- 19980 011 470
- US-A- 6 059 652
- US-A1- 2017 361 683

## Beschreibung

Es wird ein Luftausströmer mit einem Bedienelement und einem rahmenförmigen Luftleitelement beschrieben, welches um seine Längsachse verschwenkbar im Bereich der Luftaustrittsöffnung eines Gehäuses des Luftausströmers gelagert ist.

Luftausströmer dienen zur Ablenkung von ausgegebener Luft, die von einer Klimaanlage oder einer anderen Belüftungseinrichtung zur Verfügung gestellt wird. Luftausströmer werden insbesondere bei Fahrzeugen dazu verwendet, um Frischluft, temperierte Luft und/oder klimatisierte Luft in den Fahrgastraum eines Fahrzeugs zu bringen. Fahrzeuge können bspw. Kraftfahrzeuge, wie PKW, LKW oder Busse, Züge, Flugzeuge oder Schiffe sein. Bei Luftausströmern kann in der Regel neben der Steuerung der Ablenkung von ausgegebener Luft, bspw. von einer Klimaanlage, auch die Menge an ausgegebener Luft geregelt werden. Die Menge der zugeführten Luft wird über eine Steuereinrichtung geregelt, die bspw. mit einer Bedieneinrichtung zum Verschwenken von Lamellen oder getrennt von einer solchen Bedieneinrichtung neben einer Ausströmöffnung angeordnet ist. Luftausströmer können in einem Fahrzeugarmaturenbrett oder im Bereich der A- oder B- Säule oder am Dach eines Kraftfahrzeuges angeordnet sein.

### Stand der Technik

Luftausströmer sind in verschiedenen Ausführungen bekannt. Konventionelle Luftausströmer weisen zur Luftablenkung mindestens eine Gruppe von verschwenkbar gelagerten Lamellen auf. Zusätzlich zu einer ersten Gruppe von Lamellen kann eine zweite Gruppe von Lamellen vorgesehen sein, wobei die Lamellen der zweiten Gruppe von Lamellen orthogonal zu den Lamellen der ersten Gruppe verschwenkt werden können.

Konventionelle Luftausströmer weisen zudem ein verschiebbar auf einer Steuerlamelle gelagertes Bedienteil auf. Das Bedienteil neigt nach häufigem Gebrauch zu einem Verkanten. Ferner kann es zu Geräuschen beim Verschieben des Bedienteils kommen, wenn dieses nicht unter hohen Toleranzvorgaben an der Steuerlamelle angeordnet ist.

Darüber hinaus sind Luftausströmer mit Luftleitelementen bekannt, die um orthogonal zueinander verlaufende Schwenkachsen verschwenkbar sind. Ein solcher Luftausströmer ist beispielweise aus JP 2013-154735 A bekannt. Der Luftausströmer weist ein Gehäuse und ein erstes Luftleitelement auf. Zusätzlich weist der Luftausströmer ein zweites Luftleitelement auf, welches um eine orthogonal zur Schwenkachse des ersten Luftleitelementes verlaufende Schwenkachse im ersten Luftleitelement gelagert ist. Das zweite Luftleitelement weist eine wabenförmige Struktur auf. Die wabenförmige Struktur dient zur Luftablenkung.

Die Luftleitelemente von JP 2013-154735 A ermöglichen jedoch nur eine geringe Luftablenkung. Im Vergleich zu konventionellen Luftausströmern mit verschwenkbar gelagerten Lamellen, die jeweils um eine Schwenkachse verschwenkt werden können und damit eine Luftablenkung bewirken, weist der Luftausströmer aus JP 2013-154735 A nur zwei zueinander verschwenkbar gelagerte Luftleitelemente auf.

Aus der DE 10 2016 008 169 A1 ist eine Belüftungseinrichtung für einen Innenraum eines Kraftfahrzeugs mit einem Rahmenteil bekannt, an dem um eine erste Achse verschwenkbar ein Düsengehäuse mit einer darin aufgenommenen verschwenkbaren Lamellenanordnung gelagert ist. Um eine derartige Belüftungseinrichtung bereitzustellen, welche einen möglichst geringen Bauraumbedarf zur Abdeckung eines möglichst großen Verstell- und Belüftungsbereiches aufweist, ist vorgesehen, dass die Lamellenanordnung um eine zweite Achse, welche sich parallel zu der ersten Achse und von dieser beabstandet erstreckt, verschwenkbar ist und jeweilige Verschwenkbewegungen des Düsengehäuses und der Lamellenanordnung mittels einer Übersetzung aneinander gekoppelt sind.

Aus der DE 10 2013 101 887 A1 ist eine Einknopfeinrichtung zum Steuern eines Luftstroms aus einem Luftausströmer, mit vertikal angeordneten und horizontal angeordneten verschwenkbaren Lamellen und einer Schließeinrichtung im Gehäuse des Luftausströmers, bekannt. Die Einknopfeinrichtung weist ein Bedienelement auf, das von einem ringförmigen Bedienrad umgeben ist, das in einer Aufnahme einer horizontalen Lamelle gelagert ist. Über eine Bewegung des Bedienelementes in vertikaler Richtung, zusammen mit dem Bedienrad, werden die Horizontallamellen verschwenkt und bei Bewegung in horizontaler Richtung die Vertikallamellen und durch Drehbewegung des Bedienrades die Schließeinrichtung. DE 10 20313 1001 887 A1 offenbart auch einen Luftausströmer mit einer verschwenkbar gelagerten Lamelleneinheit, die mit dahinter angeordneten Lamellen gekoppelt ist. Die Lamelleneinheit wiest eine Aufnahme auf, in der ein Bedienelement orthogonal zur Schwenkachse der Lamelleneinheit verschwenkbar gelagert ist.

Aus der JP 2013-112 255 A ist eine Klimatisierung für ein-Kraftfahrzeug bekannt. Diese besteht aus einem Gehäuse und einer ringförmigen Rippe und in Luftstromrichtung angeordneten Seitenrippen. Das Gehäuse weist einen Innenraum als Belüftungspfad für die Klimatisierungsluft auf. Für die Klimatisierungsluft sind zur Entlüftungsrichtung am Belüftungspfad orthogonal eine erste Richtung und vertikal eine zweite Richtung einstellbar. Es ist ein Verriegelungsmechanismus angeordnet, der den Belüftungspfad in der ersten Richtung mittels der ringförmigen Rippe verriegelt.

US 6,059,652 A offenbart einen Luftausströmer mit einem verschwenkbar gelagerten Rahmen, in dem eine Vielzahl von vertikalen Lamellen verschwenkbar gelagert ist. Die Schwenkachse des Rahmens verläuft orthogonal zur Schwenkachse der vertikalen Lamellen. Ein Bedienelement ist direkt mit einer mittleren vertikalen Lamelle verbunden, so dass eine Verlagerung des Bedienelements ein Verschwenken der vertikalen Lamellen bewirkt. KR 1998 0011470 U offenbart einen im Wesentlichen gleich aufgebauten Luftausströmer.

ES 1 047 777 U offenbart einen kugelförmigen Luftausströmer mit feststehenden Lamellen, die in einem Rahmen gelagert sind, wobei der Rahmen verschwenkbar gelagert ist. Ein Bedienelement ist verdrehbar an einer Lamelle gelagert und dient zum Verschwenken von Drosselklappen.

JP 2007 118884 A offenbart einen Luftausströmer mit einem schwenkbar gelagerten Rahmen, in dem mehrere Lamellen um eine orthogonal zur Schwenkachse des Rahmens verlaufende Achse verschwenkbar gelagert sind, wobei eine der Lamellen ein abstehendes Bedienelement zum Verschwenken der Lamellen aufweist. US 2017/361683 A1 offenbart ebenfalls einen solchen Luftausströmer. Ein Luftausströmer mit einem rahmenförmigen Luftleitelement und vorgelagerten Lamellen ist darüber hinaus aus DE 10 2016 203139 A1 bekannt.

Um eine Luftablenkung in eine bestimmte Richtung zu erreichen, muss ein zugehöriges Luftleitelement entsprechend verschwenkt werden. In Extremstellungen wird das Luftleitelement soweit verschwenkt, dass die äußeren Randbereiche verhältnismäßig weit aus ihrer Ruhelage bzw. Ausgangsstellung verlagert werden müssen. Um dies zu erreichen, muss der Luftausströmer relativ groß bauen. Darüber hinaus können in Extremstellungen die Luftleitelemente weit von dem Luftausströmer abstehen.

### Aufgabe

Es ist daher Aufgabe, einen Luftausströmer anzugeben, der die Nachteile des Stands der Technik behebt und eine alternative Lösung bereitstellt, wobei der Luftausströmer einfach aufgebaut ist und wenig Platz benötigt.

### Lösung

Die Aufgabe wird durch einen Luftausströmer mit einem Bedienelement und einem rahmenförmigen Luftleitelement gelöst, welches um seine Längsachse verschwenkbar im Bereich der Luftaustrittsöffnung eines Gehäuses des Luftausströmers gelagert ist, wobei
- in dem rahmenförmigen Luftleitelement das Bedienelement zum Einstellen der Richtung von ausströmender Luft verschwenkbar gelagert ist,
- das Bedienelement sich parallel zu gegenüberliegenden ersten Seitenwänden des rahmenförmigen Luftleitelementes erstreckt,
- das Bedienelement sich über die durch das rahmenförmige Luftleitelement gebildete Öffnung zwischen, orthogonal zu den ersten Seitenwänden, gegenüberliegenden zweiten Seitenwänden des rahmenförmigen Luftleitelements erstreckt,
- die ersten Seitenwände eine größere Länge aufweisen als die zweiten Seitenwände,
- die ersten Seitenwände parallel zur Schwenkachse des rahmenförmigen Luftleitelementes verlaufen,
- die Schwenkachse des Bedienelements im rahmenförmigen Luftleitelement orthogonal zur Schwenkachse des rahmenförmigen Luftleitelementes verläuft, das Bedienelement mit einer Gruppe von Lamellen gekoppelt ist, deren Schwenkachsen parallel zur Schwenkachse des Bedienelements im rahmenförmigen Luftleitelement verlaufen und die in Luftströmungsrichtung dem rahmenförmigen Luftleitelement vorgelagert im Gehäuse verschwenkbar gelagert sind, und
- das Bedienelement als Luftleitelement ausgebildet ist.
Das Bedienelement des Luftausströmers dient sowohl zum Verschwenken der Lamellen, die in Luftströmungsrichtung dem rahmenförmigen Luftleitelement vorgelagert sind, als auch zum Ablenken der Luft. Wenn das rahmenförmige Luftleitelement verschwenkt wird, erfolgt im gleichen Maße ein Verschwenken des Bedienelementes. Das Bedienelement behält beim Verschwenken stets seine parallele Ausrichtung zu den gegenüberliegenden ersten Seitenwänden des rahmenförmigen Luftleitelementes bei. Vorzugsweise ist der Luftausströmer so ausgebildet, dass die Luftablenkung über das rahmenförmige Luftleitelement in der Richtung erfolgt, welche eine geringere Luftablenkung bereitstellen soll. Die Luftablenkung in der Richtung, in welcher eine größtmögliche Luftablenkung erfolgen soll, wird über die Lamellen durchgeführt.

Der Luftausströmer ermöglicht eine Luftablenkung in verschiedene Richtungen mit einem geringen Platzbedarf. Das Bedienelement ist ferner integraler Bestandteil der Luftablenkvorrichtungen und fällt daher auch optisch nicht auf. D.h., dass das Bedienelement nicht als klassisches Bedienelement wahrgenommen wird. Dadurch, dass eine Luftablenkung über Lamellen vorgesehen ist, muss das rahmenförmige Luftleitelement nicht übermäßig verschwenkt werden, um eine entsprechende Ablenkung zu erreichen.

Bei dem Luftausströmer wird eine lineare Verlagerung eines Bedienteils, wie es im Stand der Technik bekannt ist, durch eine rotatorische Bewegung ersetzt, wodurch das Bedienteil größer bauen kann, weil es nicht mehr verlagert wird. Zudem sind eine aufwendige Abstimmung und das Einhalten enger Toleranzen nicht mehr notwendig. Die Kinematik zum Verschwenken ist gegenüber bekannten System wesentlich vereinfacht und daher auch zuverlässiger.

Das Bedienelement kann ferner einen rückseitig abstehenden ersten Koppelabschnitt mit einer Lagerkugel aufweisen. Ferner kann eine Lamelle der Gruppe von Lamellen einen abstehenden zweiten Koppelabschnitt mit einer Lagerkugel aufweisen.

Dabei kann die Lagerkugel des ersten Koppelabschnitts mit der Lagerkugel des zweiten Koppelabschnitts über eine Koppelstange in Verbindung stehen, wobei die Koppelstange an ihren entgegengesetzten Endabschnitten jeweils eine Öffnung für die Lagerkugeln aufweist. Die Übertragung der Schwenkbewegung des Bedienelementes auf die Lamellen wird hierdurch auf einfache Weise sichergestellt, wobei eine Übertragung der Schwenkbewegung des Bedienelementes in eine entsprechende Bewegung der Lamellen übertragen wird. Die Lamellen folgen daher stets der Ausrichtung des Bedienelementes. Die Lagerung über die Lagerkugeln erlaubt zudem, dass das rahmenförmige Luftleitelement verschwenkt werden kann, ohne dass eine Beeinflussung der Ausrichtung der Lamellen erfolgt und die Lamellen auch bei einem verschwenkten Luftleitelement weiterhin verschwenkt werden können.

Die Lamellen der Gruppe von Lamellen können weiter über einen Mitnehmer miteinander gekoppelt sein. Eine der Lamellen steht mit dem Bedienelement über die Koppelabschnitte in Verbindung und die restlichen Lamellen sind über den Mitnehmer mit der Lamelle verbunden. Wird diese Lamelle verschwenkt, folgen die anderen Lamellen automatisch der Ausrichtung der mit dem Bedienelement gekoppelten Lamelle.

Das rahmenförmige Luftleitelement kann im Bereich der Schwenkachse des Bedienelements eine Lagerachse aufweisen. Die Lagerachse erstreckt sich zwischen den beiden gegenüberliegenden ersten Seitenwänden des Luftleitelementes und definiert die Schwenkachse für das Bedienelement.

Das Bedienelement kann entlang seiner Schwenkachse einen ersten Lagerabschnitt aufweisen, über welchen das Bedienelement auf der Lagerachse des rahmenförmigen Luftleitelementes gelagert ist. Über die direkte Kopplung des Bedienelementes mit dem rahmenförmigen Luftleitelement kann bei einer Krafteinwirkung auf das Bedienelement orthogonal zur regulären Krafteinleitung zum Verschwenken der Lamellen ein Verschwenken des rahmenförmigen Luftleitelementes um dessen Schwenkachse erreicht werden. Der erste Lagerabschnitt kann insbesondere eine solche Breite aufweisen, dass die Position des Bedienelementes zwischen den gegenüberliegenden ersten Seitenwänden des rahmenförmigen Luftleitelementes sichergestellt ist. Ein Verrutschen des Bedienelementes wird dadurch verhindert. Beispielsweise ist der erste Lagerabschnitt so ausgebildet, dass dieser auf die Lagerachse des rahmenförmigen Luftleitelementes aufgesetzt und verrastet wird. Beispielsweise ist der erste Lagerabschnitt so ausgebildet, dass dieser nach dem Aufstecken auf die Lagerachse selbst gehalten wird.

Das rahmenförmige Luftleitelement kann entlang seiner Schwenkachse zweite Lagerabschnitte aufweisen, über welche das rahmenförmige Luftleitelement im Gehäuse des Luftausströmers gelagert ist. Die zweiten Lagerabschnitte sind in entsprechenden Öffnungen in den gegenüberliegenden Gehäusewänden des Luftausströmergehäuses gelagert. Die zweiten Lagerabschnitte können ferner so ausgebildet sein, dass diese einen definierten Abstand zwischen den Gehäusewänden und den äußeren Wandabschnitten des rahmenförmigen Luftleitelementes bereitstellen.

Das Gehäuse des Luftausströmers kann in weiteren Ausführungsformen Anlageabschnitte für das Bedienelement aufweisen. Die Anlageabschnitte befinden sich im Inneren des Gehäuses des Luftausströmers und stellen sicher, dass das Bedienelement beim Verschwenken der Lamellen nicht über ein bestimmtes Maß hinaus verschwenkt werden kann. Um eine Beschädigung des Bedienelementes sowie des Gehäuses des Luftausströmers zu verhindern, können an der Rückseite des Bedienelementes Dämpfungselemente, wie beispielsweise eine Silikon- oder Gummibeschichtung vorgesehen sein, damit beim Anschlagen an die Anlageabschnitte keine Beschädigungen auftreten.

Ferner kann eine Dämpfung der Bewegung des Bedienelementes sowie der Bewegung des rahmenförmigen Luftleitelementes durch zusätzliche Dämpfungseinrichtungen erreicht werden. Beispielsweise kann das Bedienelement so über den ersten Lagerabschnitt auf der Lagerachse aufgebracht sein, dass ein Verschwenken nur durch Aufbringung einer bestimmten Mindestkraft erreicht werden kann. Gleiches gilt für die Ausbildung der zweiten Lagerabschnitte, die in den Öffnungen des Luftausströmergehäuses aufgenommen sind.

In weiteren Ausführungsformen kann die Luftaustrittsöffnung in Richtung der Schwenkachse des rahmenförmigen Luftleitelementes eine größere Breite aufweisen als der dahinterliegende Luftkanal zur Zuführung von Luft zu den Lamellen, der Gruppe von Lamellen und dem rahmenförmigen Luftleitelement sowie dem Bedienelement, wobei die Lamellen der Gruppe von Lamellen im Luftkanal angeordnet sind. Hierdurch wird eine kompakte Bauform bereitgestellt. Das rahmenförmige Luftleitelement und das Bedienelement, welche eine größere Erstreckung entlang des Bedienelementes aufweisen, können sich in einem Abschnitt des Luftausströmergehäuses befinden, welcher eine größere Erstreckung aufweist. Dieser Bereich ist in der Regel die Luftaustrittsöffnung. Die Luftablenkung orthogonal zur Luftablenkung über das rahmenförmige Luftleitelement erfolgt über die Lamellen, die vorzugsweise in einem Abschnitt des Luftausströmergehäuses aufgenommen sein können, welcher eine geringere Erstreckung aufweist.

Das Bedienelement kann ferner aus einem Trägerelement und einem Dekorelement bestehen, wobei das Dekorelement beliebige Formen und Farben aufweisen kann. Beispielsweise können das Bedienelement bzw. das Dekorelement auch beleuchtbar sein. Das Trägerelement weist einen Tragabschnitt entlang der Längsachse des Bedienelementes parallel zu den ersten Seitenwänden
des Luftleitelementes sowie dem ersten Lagerabschnitt zur Lagerung auf der Lagerachse des Luftleitelementes auf. Das Dekorelement kann eine entsprechende Tiefe aufweisen, so dass eine verbesserte Luftablenkung zusätzlich beim Verschwenken des rahmenförmigen Luftleitelementes erfolgt. Da das Dekorelement keine besonderen Aufgaben übernehmen muss, kann dieses auch aus Holz bestehen, was dem Luftausströmer ein besonders hochwertiges Erscheinungsbild verleiht. Das Dekorelement kann beispielsweise einen unteren Verbindungsansatz aufweisen, der in eine entsprechende Aufnahme in dem Trägerelement eingesetzt und hierüber mit dem Trägerelement verbunden wird. Beispielsweise kann eine Clip-, Schraub-, Klebe- oder Schweißverbindung zwischen dem Dekorelement und dem Trägerelement vorgesehen sein. Auch andere Rastmittel sowie Fügeverfahren sind möglich. Beispielsweise kann das Bedienelement auch in einem Zweikomponentenspritzgussverfahren hergestellt werden, wobei für das Trägerelement ein anderer Kunststoff gewählt wird als für das Dekorelement.

Das rahmenförmige Luftleitelement, die Lamellen und das Gehäuse des Luftausströmers können ferner auch aus einem Kunststoff bestehen. Die Komponenten des Luftausströmers können daher in einem Spritzgussverfahren in einer hohen Stückzahl kostengünstig hergestellt werden.

Der hierin beschriebene Luftausströmer weist einen sehr einfachen Aufbau auf, da auch auf verschiebbare Bedienelemente verzichtet werden kann, die im Stand der Technik beispielsweise entlang einer Steuerlamelle verschoben werden. Solche Bedienelemente müssen dann zusätzlich mit den dahinter gelagerten Lamellen gekoppelt werden. Hierzu sind in der Regel komplexe Bedienmechaniken vorgesehen, die sehr störungsanfällig sind.

Der hierin beschriebene Luftausströmer hingegen weist zur Luftablenkung in einer ersten Richtung ein rahmenförmiges Luftleitelement sowie das Bedienelement auf. Das Bedienelement, welches auch zur Luftablenkung dient, bewirkt zusätzlich ein Verschwenken der dahinter gelagerten Lamellen, ohne dass zusätzliche Bedienelemente, wie verschiebbare Gleiter oder sonstiges, erforderlich sind.

### Kurzbeschreibung der Figuren

Weitere Vorteile, Merkmale und Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung eines Luftausströmers in einer beispielhaften Ausführungsform;
- Fig. 2: eine perspektivische Darstellung eines rahmenförmigen Luftleitelementes des Luftausströmers von Fig. 1;
- Fig. 3: eine Explosionszeichnung eines Bedienelementes des Luftausströmers von Fig. 1;
- Fig. 4: eine perspektivische Darstellung einer Lamelle mit einem zweiten Koppelabschnitt des Luftausströmers von Fig. 1;
- Fig. 5: eine perspektivische Darstellung von Komponenten des Luftausströmers von Fig. 1;
- Fig. 6-9: perspektivische Darstellungen des Luftausströmers von Fig. 1 in verschiedenen Stellungen;
- Fig. 10: verschiedene Ansichten des Luftausströmers von Fig. 1 in einer Neutralstellung;
- Fig. 11: verschiedene Ansichten des Luftausströmers von Fig. 1 mit einem zur Seite geschwenkten rahmenförmigen Luftleitelement;
- Fig. 12: verschiedene Ansichten des Luftausströmers von Fig. 1 mit verschwenkten Lamellen;
- Fig. 13: weitere verschiedene Ansichten des Luftausströmers von Fig. 1 mit einem zur Seite geschwenkten rahmenförmigen Luftleitelement; und
- Fig. 14: weitere verschiedene Ansichten des Luftausströmers von Fig. 1 mit verschwenkten Lamellen.

### Ausführliche Beschreibung eines beispielhaften Ausführungsbeispiels

In den Figuren mit gleichen Bezugszeichen versehene Teile entsprechen im Wesentlichen einander, sofern nichts anders angegeben ist. Darüber hinaus wird darauf verzichtet, Bestandteile zu zeigen und zu beschreiben, welche nicht wesentlich zum Verständnis der hierin offenbarten technischen Lehre sind.

Die Figuren zeigen eine beispielhafte Ausführungsform eines Luftausströmers 10. Der Luftausströmer 10 kann in einem Armaturenbrett eines Fahrzeugs eingesetzt werden und mit einer Klimaanlage zur Zuführung von klimatisierter Luft verbunden sein. In einem Fahrzeug können auch mehrere solcher Luftausströmer 10 vorgesehen sein.

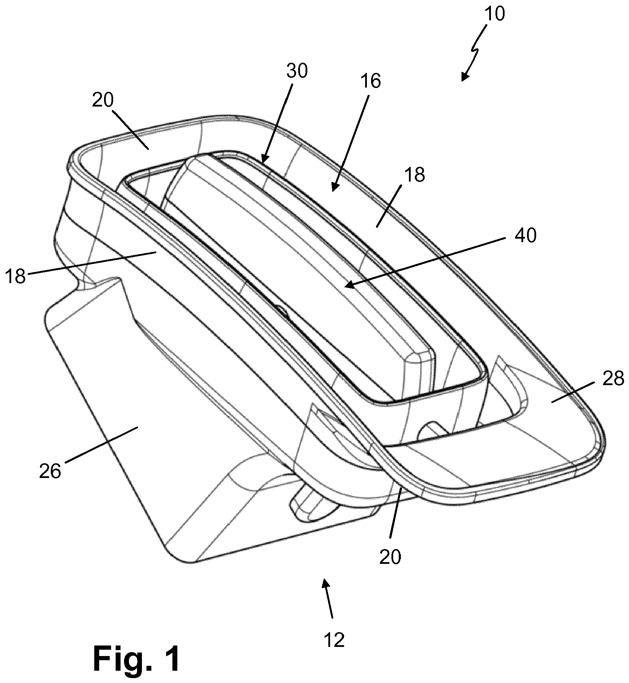

Fig. 1 zeigt eine perspektivische Darstellung des Luftausströmers 10 in einer Neutralstellung. Der Luftausströmer 10 weist ein Gehäuse 12 auf. Das Gehäuse 12 weist wiederum einen Gehäuseabschnitt 26 auf, über den der Luftausströmer 10 mit einem Zuführkanal zur Zuführung von klimatisierter Luft verbunden ist. Über den Zuführkanal ist der Luftausströmer 10 mit der Klimaanlage verbunden.

An den Gehäuseabschnitt 16 sind gegenüberliegende Seitenwände 18 und 20 angeformt, die einen umlaufenden weiteren Gehäuseabschnitt bilden. Zwischen den gegenüberliegenden Seitenwänden 18 und 20 befindet sich die Luftaustrittsöffnung 16. Über die Luftaustrittsöffnung 16 wird klimatisierte Luft ausgegeben. Die Luftaustrittsöffnung 16 ist von einer umlaufenden Blende 28 umgeben. Im Bereich der Luftaustrittsöffnung 16 ist ein rahmenförmiges Luftleitelement 30 verschwenkbar gelagert. In dem rahmenförmigen Luftleitelement 30 ist zudem ein Bedienelement 40 verschwenkbar gelagert, wobei die Schwenkachse des Bedienelementes 40 orthogonal zur Schwenkachse des rahmenförmigen Luftleitelementes 30 verläuft. Das rahmenförmige Luftleitelement 30 und das Bedienelement 40 dienen zur Luftablenkung der ausgegebenen Luft. Zusätzlich weist der Luftausströmer 10 Lamellen 60 und 61 auf, die in der Darstellung von Fig. 1 nicht gezeigt sind.

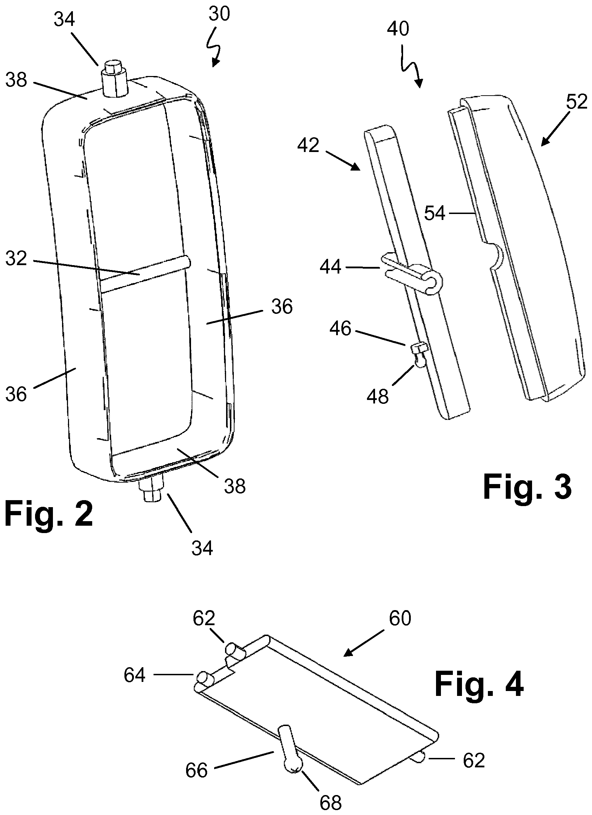

Fig. 2 zeigt eine perspektivische Darstellung des rahmenförmigen Luftleitelementes 30 des Luftausströmers 10. Das rahmenförmige Luftleitelement 30 weist gegenüberliegende Seitenwände 36 und 38 auf. Zwischen den gegenüberliegenden Seitenwänden 36 und 38 erstreckt sich eine Lagerachse 32. Auf der Lagerachse 32 ist das Bedienelement 40 gelagert. Die Lagerachse 32 definiert zudem die Schwenkachse des Bedienelementes 40. An den Seitenwänden 38 erstrecken sich zweite Lagerabschnitte 34 nach außen. Die Lagerabschnitte 34 weisen einen ersten Bereich mit einem größeren Durchmesser und einen zweiten Bereich mit einem kleineren Durchmesser auf. Die Bereiche mit den kleineren Durchmessern sind in Öffnungen 24 im Gehäuse 12 des Luftausströmers 10 aufgenommen. Die Bereiche mit dem größeren Durchmesser dienen als Abstandselemente und stellen sicher, dass das rahmenförmige Luftleitelement 30 seine Position in Bezug auf das Gehäuse 12 beibehält.

Die Seitenwände 36 und 38 weisen eine Höhe auf, die so bestimmt ist, dass eine Luftablenkung beim Verschwenken erreicht wird. Hierzu können die Seitenwände 36 und 38 auch gebogen bzw. leicht gekrümmt sein, damit beim Verschwenken um die durch die zweiten Lagerabschnitte 34 verlaufende Schwenkachse eine gezielte Luftablenkung erreicht oder verbessert wird.

Die Höhe der Seitenwände 36 und 38 legt zudem auch fest, inwieweit das rahmenförmige Luftleitelement 30 verschwenkt werden kann, bevor dieses an den inneren Gehäusewänden des Gehäuses 12 anschlägt.

Der beispielhaft dargestellte Luftausströmer 10 weist eine größere Höhe als Breite auf. Daher ist das Luftleitelement 30 so ausgebildet, dass dieses zur Luftablenkung nach rechts und links vorgesehen ist. Die Luftablenkung nach rechts und links bzw. zur Seite kann bei dem beispielhaften Luftausströmer 10 geringer ausgeführt werden als die Luftablenkung nach oben und unten. Aus diesem Grund ist die Anordnung und Ausbildung der Lamellen 60, 61 sowie des Luftleitelementes 30 entsprechend gewählt.

In weiteren Ausführungsformen kann die Ausrichtung des Luftleitelementes 30 auch um 90° verdreht sein, so dass ein wesentlich breiterer Luftausströmer 30 bereitgestellt wird. Der in den Figuren dargestellte Luftausströmer 10 ist für eine Ausrichtung wie dargestellt vorgesehen, da in der Regel die Luftablenkung in den Beinbereich bzw. zu dem Kopf eines Fahrgastes eine größere Ablenkung erfordert als das Zuführen von Luft auf verschiedene Brust- bzw. Oberkörperbereiche des Fahrgastes.

Fig. 3 zeigt eine Explosionszeichnung des Bedienelementes 40 des Luftausströmers 10. Das Bedienelement 40 besteht aus einem Trägerelement 42 und einem Dekorelement 52. Das Trägerelement 42 besitzt eine langgestreckte Form und weist einen ersten Lagerabschnitt 44 auf. Der erste Lagerabschnitt 44 weist eine Breite im Wesentlichen entsprechend der Breite der Lagerachse 32 auf, so dass im eingesetzten Zustand des Trägerelementes 42 das Bedienelement 40 nicht mehr entlang der Lagerachse 32 verschoben werden kann. Die Ausbildung des ersten Lagerabschnitts 44 ist so gewählt, dass dieser auf die Lagerachse 32 aufgesteckt werden kann und danach die Position beibehält. Dies kann durch ein sogenanntes Verklipsen erfolgen.

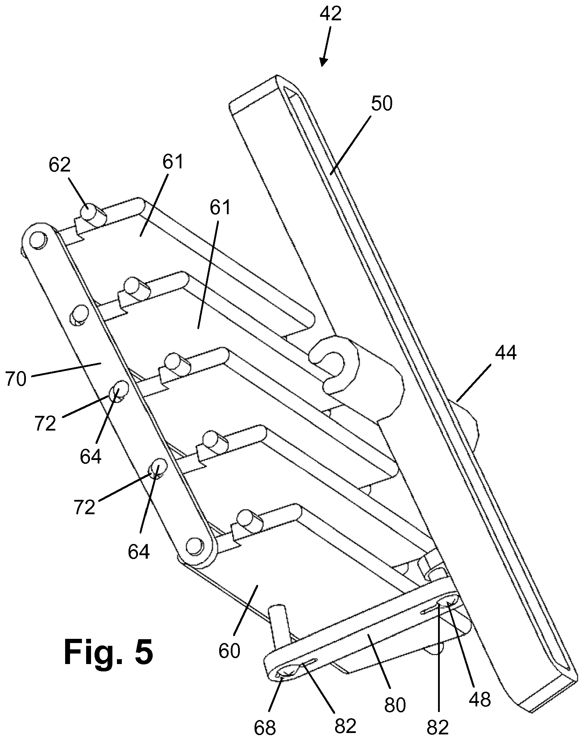

Das Trägerelement 42 weist ferner einen rückseitigen ersten Koppelabschnitt 46 auf, an dem eine Lagerkugel 48 angeordnet ist. Die Lagerkugel 48 ist in einer entsprechenden Öffnung 82 einer Koppelstange 80 (siehe Fig. 5) aufgenommen und über die Koppelstange 80 mit einer Lamelle 60 bewegungsmäßig gekoppelt. Zusätzlich weist das Trägerelement 42 an der Vorderseite eine Öffnung 50 auf. In die Öffnung 50 kann ein Verbindungssteg 54 des Dekorelementes 52 eingesetzt werden. Beispielsweise kann das Verbinden des Trägerelementes 42 mit dem Dekorelement 52 über eine Rastverbindung erfolgen. In alternativen Ausführungsformen kann auch ein Verkleben erfolgen.

Das Dekorelement 52 weist eine größere Höhe als das Trägerelement 42 auf. Daher dient das Dekorelement 52 beim Verschwenken des rahmenförmigen Luftleitelementes 30 zusätzlich als Luftablenkeinrichtung. Beim Verschwenken des rahmenförmigen Luftleitelementes 30 um die durch die zweiten Lagerabschnitte 34 verlaufende Achse wird das Bedienelement 40 und damit das Dekorelement 52 nicht verschwenkt. Die parallele Ausrichtung des Dekorelementes 52 zu den gegenüberliegenden Seitenwänden 36 bleibt daher bestehen. Auch der Abstand des Bedienelementes 40 zu den gegenüberliegenden Seitenwänden 36 verändert sich nicht.

Das Dekorelement 52 kann aus verschiedenen Materialien bestehen. Beispielsweise kann das Dekorelement 52 aus einem Metall, einer Metalllegierung, aus einem Kunststoff oder aus Holz bestehen. Das Bedienelement 40 kann daher über das Dekorelement 52 eine besonders optisch ansprechende Erscheinung aufweisen.

Fig. 4 zeigt eine perspektivische Darstellung einer Lamelle 60 mit einem zweiten Koppelabschnitt 66 des Luftausströmers 10. Die Lamelle 60 weist den nach unten abstehenden zweiten Koppelabschnitt 66 mit einer Lagerkugel 68 auf. Die Lagerkugel 68 ist in einer weiteren Öffnung 82 der Koppelstange 80 aufgenommen (siehe Fig. 5). Beim Verschwenken des Bedienelementes 40 erfolgt über die Kopplung mit der Koppelstange 80 damit ein Verschwenken. Die Lamelle 60 ist über Lagerzapfen 62 verschwenkbar in den gegenüberliegenden Seitenwänden des Gehäuses 12 des Luftausströmers 10 gelagert. Die Lamelle 60 weist ferner einen Koppelzapfen 64 auf, der in einer Öffnung 72 eines Mitnehmers 70 gelagert ist. Der Mitnehmer 70 weist weitere Öffnungen 72 auf, in welchen die Koppelzapfen 64 von weiteren Lamellen 61 aufgenommen sind.

Fig. 5 zeigt eine perspektivische Darstellung von Komponenten des Luftausströmers 10 von Fig. 1 ohne Gehäuse 12, ohne rahmenförmiges Luftleitelement 30 sowie ohne Dekorelement 52.

In Fig. 5 ist die Öffnung 50 an der Vorderseite des Trägerelementes 42 dargestellt. Zudem ist die Kopplung des ersten Koppelabschnitts 46 über die Koppelstange 80 mit der Lamelle 60 und deren zweiten Koppelabschnitt 66 dargestellt. Die restlichen Lamellen 61 sind bis auf den zweiten Koppelabschnitt 66 identisch zu der Lamelle 60 aufgebaut. Die Lamelle 60 ist über den Mitnehmer 70 mit den anderen Lamellen 61 gekoppelt, so dass ein Verschwenken der Lamelle 60 automatisch ein Verschwenken der Lamellen 61 im gleichen Maße bewirkt.

Wird das Bedienelement 40 um die durch den ersten Lagerabschnitt 44 verlaufende Schwenkachse verschwenkt, erfolgt eine Verlagerung des hinteren ersten Koppelabschnitts 46 und damit eine Verlagerung der Koppelstange 80. Dies bewirkt wiederum eine Verlagerung des zweiten Koppelabschnitts 66 über die in der Öffnung 82 aufgenommene Lagerkugel 68, was zu einem Verschwenken der Lamelle 60 führt. Ein Verschwenken der Lamelle 60 bewirkt über den Mitnehmer 70 ein Verschwenken der anderen Lamellen 61, so dass ein synchrones Verschwenken aller Lamellen 60 und 61 erreicht wird.

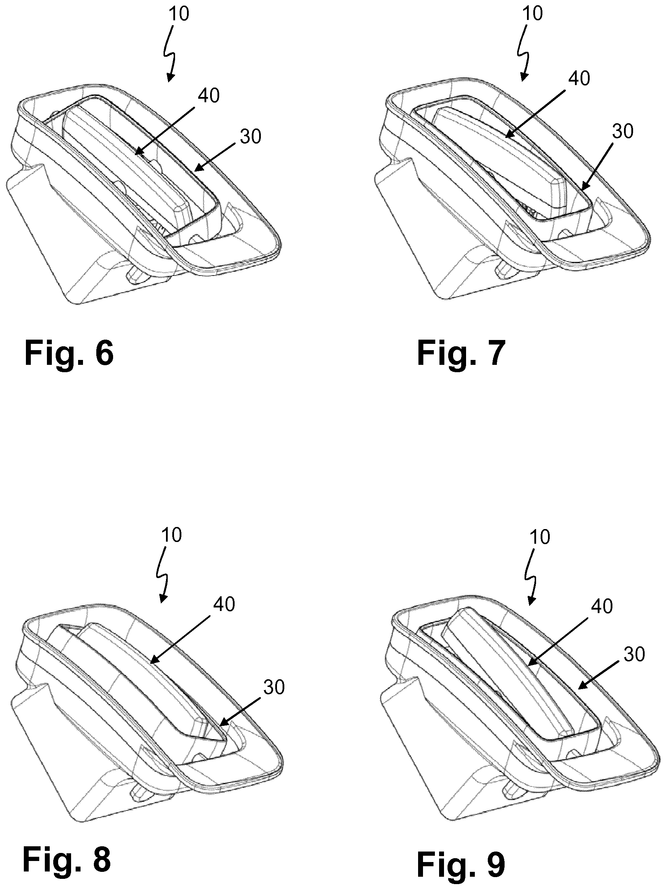

Die Fig. 6 bis 9 zeigen perspektivische Darstellungen des Luftausströmers 10 von Fig. 1 in verschiedenen Stellungen. In Fig. 6 sind das Bedienelement 40 und das rahmenförmige Luftleitelement 30 zur Seite nach links verschwenkt. Bei Fig. 7 sind das Bedienelement 40 und die dahinter gelagerten Lamellen 60 und 61 nach oben verschwenkt. Das rahmenförmige Luftleitelement 30 ist dabei nicht verschwenkt.

Fig. 8 zeigt einen Zustand, in dem das rahmenförmige Luftleitelement 30 und das Bedienelement 40 zur Seite verschwenkt werden. Die Lamellen 60 und 61 sind nicht verschwenkt, da die Ausrichtung des Bedienelementes 40 nicht verändert wurde.

Fig. 9 zeigt schließlich einen Zustand, bei dem das Bedienelement 40 und damit die Lamellen 60 und 61 nach unten verschwenkt sind, das rahmenförmige Luftleitelement 30 jedoch seine ursprüngliche Position beibehält.

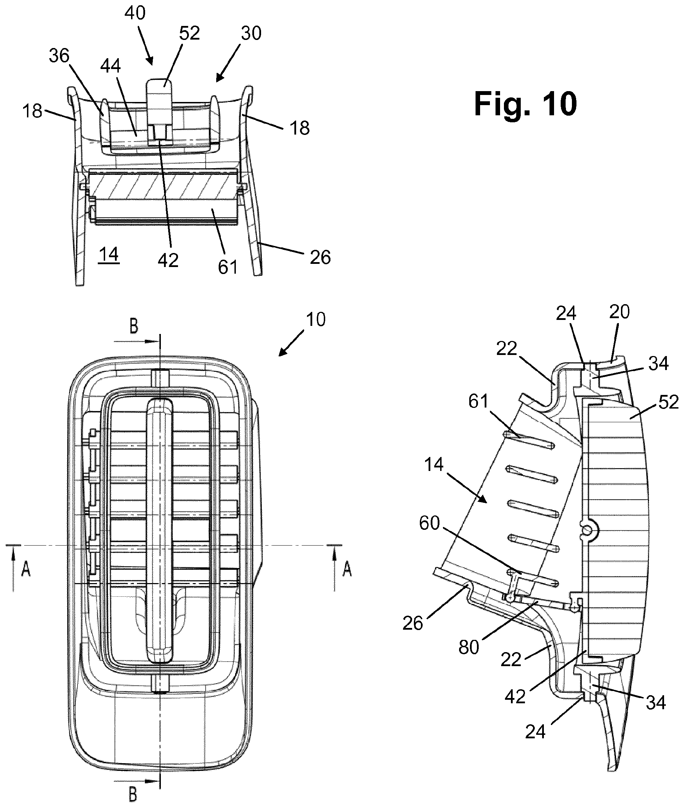

Fig. 10 zeigt verschiedene Ansichten des Luftausströmers 10 von Fig. 1 in einer Neutralstellung. Fig. 10 entspricht im Wesentlichen der Darstellung von Fig. 1.

Die Lamellen 60 und 61 befinden sich in einem Luftkanal 14, der sich im Wesentlichen auf Höhe des Gehäuseabschnitts 26 befindet. Das Bedienelement 40, bestehend aus dem Trägerelement 42 und dem Dekorelement 52, befindet sich im Wesentlichen im Bereich der Luftaustrittsöffnung 16. Über die Lamellen 60 und 61 kann ein größeres Verschwenken nach oben und unten erreicht werden, als eine Luftablenkung zur Seite hin über das rahmenförmige Luftleitelement 30 und das Bedienelement 40.

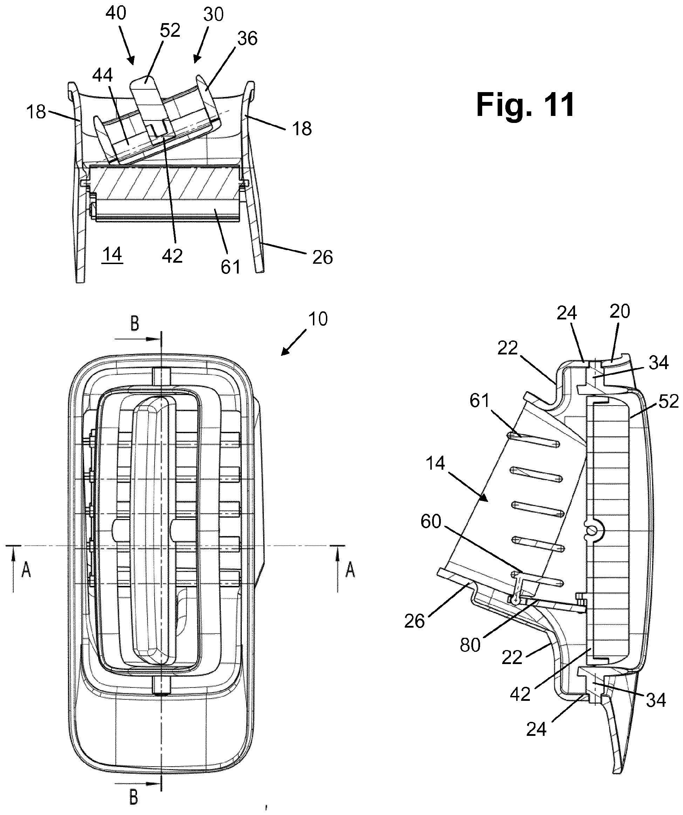

Fig. 11 zeigt verschiedene Ansichten des Luftausströmers 10 von Fig. 1 mit einem zur Seite geschwenkten rahmenförmigen Luftleitelement 30. Die Darstellung von Fig. 11 entspricht im Wesentlichen der Darstellung von Fig. 6.

Das rahmenförmige Luftleitelement 30 ist über das Bedienelement 40 zur Seite verschwenkt. Hierzu wird das Bedienelement 40 über das Dekorelement 52 an der Vorderseite gegriffen und um die durch die zweiten Lagerabschnitte 34 verlaufende Achse verschwenkt. Die dahinter gelagerten Lamellen 60 und 61 werden nicht verschwenkt, da keine Verlagerung des Bedienelementes 40 um die durch die Lagerachse 32 verlaufende Achse erfolgt.
Das Dekorelement 52 ist so ausgebildet, dass es die gegenüberliegenden Seitenwände 36 des rahmenförmigen Luftleitelementes 30 übersteht. Hierdurch wird einerseits die Bedienung des Luftleitelementes 10 vereinfacht als auch die Luftablenkung unterstützt. Ausströmende Luft wird über das weit nach vorne stehende Dekorelement 52 entsprechend zur Seite umgelenkt, so dass auch bei einer geringeren Luftablenkung gegenüber den Lamellen 60 und 61 eine ausreichende Luftablenkung möglich ist.

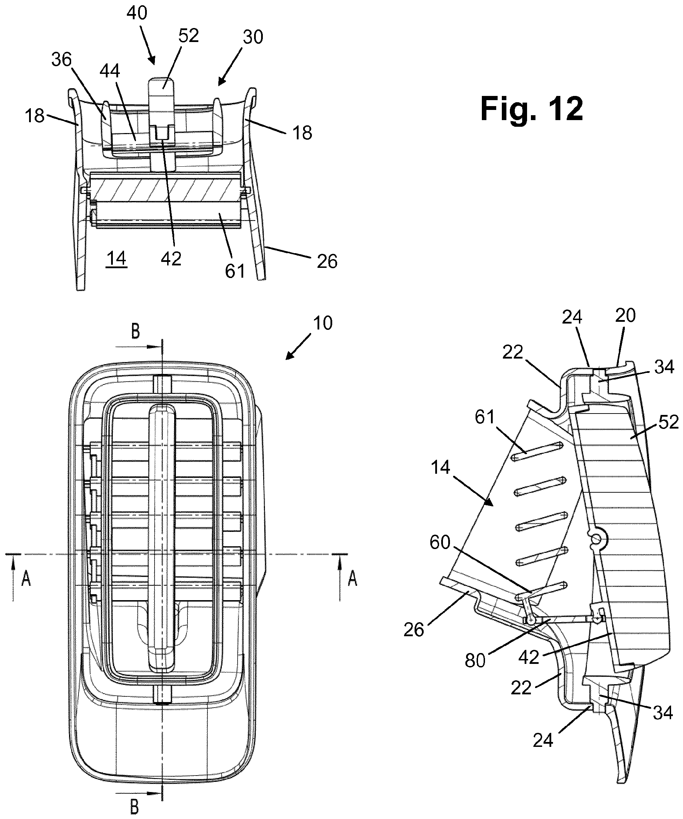

Fig. 12 zeigt verschiedene Ansichten 10 des Luftausströmers 10 von Fig. 1 mit verschwenkten Lamellen 60 und 61. Die Darstellung von Fig. 12 entspricht im Wesentlichen der Darstellung von Fig. 7.

Zum Verschwenken der Lamellen 60 und 61 wird das Bedienelement 40 um die durch die Lagerachse 32 verlaufende Achse nach oben verschwenkt. Hierzu wird ein Druck auf das Bedienelement im oberen Abschnitt des Dekorelementes 52 ausgeübt. Der untere Abschnitt des Bedienelementes 40 wird dabei in Richtung der Luftaustrittsöffnung 16 nach vorne verlagert, was ebenso zu einer Verlagerung der Koppelstange 80 in dieser Richtung zur Folge hat. Die Lamelle 60 mit dem zweiten Koppelabschnitt 66 wird hierdurch verschwenkt. Die anderen Lamellen 61 folgen über die Kopplung mit dem Mitnehmer 70 der Ausrichtung der Lamelle 60.

Eine Luftablenkung zur Seite hin erfolgt nicht, da das rahmenförmige Luftleitelement 30 seine ursprüngliche Position beibehält. Ein versehentliches Verschwenken wird dadurch erschwert, dass das Bedienelement 40 entlang der Schwenkachse des rahmenförmigen Luftleitelementes 30 verläuft.
Um bei einem Verschwenken des rahmenförmigen Luftleitelementes 30 ein unbeabsichtigtes Verschwenken der Lamellen 60 und 61 zu verhindern, kann anstelle der Betätigung über das Bedienelement 40 ein Druck auf eine der Seitenwände 36 des rahmenförmigen Luftleitelementes 30 aufgebracht werden.

Die Kopplung des Bedienelementes 40 mit den Lamellen 60 und 61 ermöglicht zudem eine intuitive Steuerung des Luftausströmers 10. Wünscht ein Fahrgast, die Luft nach oben hin abzulenken, so wird dieser intuitiv einen Druck auf den oberen Bereich des Bedienelementes 40 ausüben. Die Lamellen 60 und 61 folgen dieser Ausrichtung und stellen eine gewünschte Luftablenkung nach oben bereit.

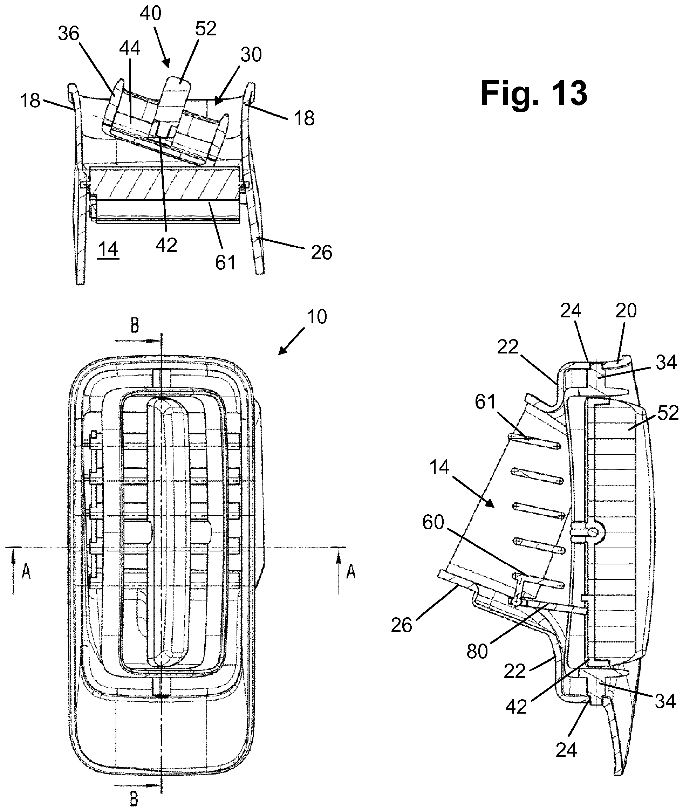

Fig. 13 zeigt weiterhin verschiedene Ansichten des Luftausströmers 10 von Fig. 1 mit einem zur Seite geschwenkten rahmenförmigen Luftleitelement 30. Die Darstellung von Fig. 13 entspricht im Wesentlichen der Darstellung von Fig. 8.

In Fig. 13 ist der Luftausströmer 10 gezeigt, der in die entgegengesetzte Richtung verschwenkt ist, wie dies in Fig. 11 bereits gezeigt wurde.

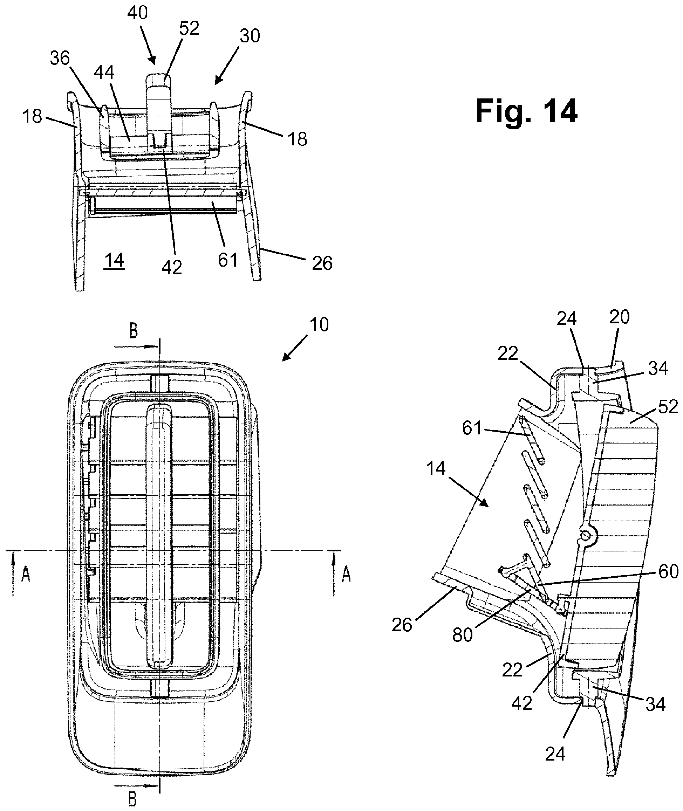

Fig. 14 zeigt schließlich weitere verschiedene Ansichten des Luftausströmers 10 von Fig. 1 mit verschwenkten Lamellen. Die Darstellung von Fig. 14 entspricht im Wesentlichen der Darstellung von Fig. 9.

Die Lamellen 60 und 61 sind in der Darstellung von Fig. 14 nach unten verschwenkt. Hierzu wurde ein Druck auf das Bedienelement 40 im unteren Bereich ausgeübt. Um ein übermäßiges Verschwenken des Bedienelementes 40 zu verhindern, weist das Gehäuse 12 des Luftausströmers 10 im Übergang zwischen dem Gehäuseabschnitt 26 und der Luftaustrittsöffnung 16 Anlageabschnitte 22 auf. Auf diese Anlageabschnitte 22 kann die Rückseite des Bedienelementes 40 im Bereich des Trageelementes 42 in Anlage kommen. Ein weiteres Verschwenken des Bedienelementes 40 sowie der Lamellen 60 und 61 wird dadurch verhindert.

Wie einem Vergleich der Darstellungen der Fig. 10 bis 14 entnommen werden kann, sind über die Lamellen 60 und 61 große Luftablenkungen trotz der geringen Erstreckung der Lamellenanordnung möglich. Die Lamellenanordnung mit den Lamellen 60 und 61 ist daher im Gehäuseabschnitt 26 im Luftkanal 14 angeordnet. Dieser Bereich ist baulich kleiner ausgebildet als die Luftaustrittsöffnung und die darin befindlichen gegenüberliegenden Seitenwände 18 und 20 des Gehäuses 12.

Um auch eine relativ große Luftablenkung zur Seite hin zu erreichen, weisen die Seitenwände 36 und das Bedienelement 40, insbesondere das Dekorelement 52, eine relativ große Höhe auf. Das Dekorelement 52 übersteht sogar die Seitenwände 36 und 38 des rahmenförmigen Luftleitelementes 30 nach außen.

Die beispielhafte Ausführungsform des Ausströmers verdeutlicht die einfache Ausgestaltung und die hohe Flexibilität bei der Bereitstellung einer Luftablenkung. Die hierin gezeigte Lösung weist einen sehr einfachen Aufbau auf und ermöglicht es, unter der Bereitstellung von einer Vielzahl von optischen Gestaltungsmöglichkeiten eine zuverlässige Luftablenkung bereitzustellen.

Das Dekorelement 52 kann insbesondere aus verschiedenen Werkstoffen bestehen. Bestimmte Anforderungen an eine Beständigkeit hinsichtlich einer Verlagerung auf Grund eines Schiebeelementes oder sonstiger kinematischer Bauteile zum Verschwenken müssen daher nicht eingehalten werden.

### Bezugszeichenliste

- 10: Luftausströmer
- 12: Gehäuse
- 14: Luftkanal
- 16: Luftaustrittsöffnung
- 18: Seitenwand
- 20: Seitenwand
- 22: Anlageabschnitt
- 24: Öffnung
- 26: Gehäuseabschnitt
- 28: Blende
- 30: Luftleitelement
- 32: Lagerachse
- 34: zweiter Lagerabschnitt
- 36: Seitenwand
- 38: Seitenwand
- 40: Bedienelement
- 42: Trägerelement
- 44: erster Lagerabschnitt
- 46: erster Koppelabschnitt
- 48: Lagerkugel
- 50: Öffnung
- 52: Dekorelement
- 54: Verbindungssteg
- 60: Lamelle
- 61: Lamelle
- 62: Lagerzapfen
- 64: Koppelzapfen
- 66: zweiter Koppelabschnitt
- 68: Lagerkugel
- 70: Mitnehmer
- 72: Öffnung
- 80: Koppelstange
- 82: Öffnung

## Patentansprüche

1. Luftausströmer mit einem Bedienelement (40) und einem rahmenförmigen Luftleitelement (30), welches um seine Längsachse verschwenkbar im Bereich der Luftaustrittsöffnung (16) eines Gehäuses (12) des Luftausströmers (10) gelagert ist, wobei
- in dem rahmenförmigen Luftleitelement (30) das Bedienelement (40) zum Einstellen der Richtung von ausströmender Luft verschwenkbar gelagert ist,
- das Bedienelement (40) sich parallel zu gegenüberliegenden ersten Seitenwänden (36) des rahmenförmigen Luftleitelements (30) erstreckt,
- das Bedienelement (40) sich über die durch das rahmenförmige Luftleitelement (30) gebildete Öffnung zwischen, orthogonal zu den ersten Seitenwänden (36), gegenüberliegenden zweiten Seitenwänden (38) des rahmenförmigen Luftleitelements (30) erstreckt,
- die ersten Seitenwände (36) eine größere Länge aufweisen als die zweiten Seitenwände (38),
- die ersten Seitenwände (36) parallel zur Schwenkachse des rahmenförmigen Luftleitelementes (30) verlaufen,
- die Schwenkachse des Bedienelements (40) im rahmenförmigen Luftleitelement (30) orthogonal zur Schwenkachse des rahmenförmigen Luftleitelements (30) verläuft,
- das Bedienelement (40) mit einer Gruppe von Lamellen (60, 61) gekoppelt ist, deren Schwenkachsen parallel zur Schwenkachse des Bedienelements (40) im rahmenförmigen Luftleitelement (30) verlaufen und die in Luftströmungsrichtung dem rahmenförmigen Luftleitelement (30) vorgelagert im Gehäuse (12) verschwenkbar gelagert sind, und
- das Bedienelement (40) als Luftleitelement ausgebildet ist.

2. Luftausströmer nach Anspruch 1, wobei das Bedienelement (40) einen rückseitig abstehenden ersten Koppelabschnitt (46) mit einer Lagerkugel (48) aufweist.

3. Luftausströmer nach Anspruch 2, wobei eine Lamelle (60) der Gruppe von Lamellen (60, 61) einen abstehenden zweiten Koppelabschnitt (66) mit einer Lagerkugel (68) aufweist.

4. Luftausströmer nach Anspruch 3, wobei die Lagerkugel (48) des ersten Koppelabschnitts (46) mit der Lagerkugel (68) des zweiten Koppelabschnitts (66) über eine Koppelstange (80) in Verbindung steht, wobei die Koppelstange (80) an ihren entgegengesetzten Endabschnitten jeweils eine Öffnung 82() für die Lagerkugeln (48, 68) aufweist.

5. Luftausströmer nach einem der Ansprüche 1 bis 4, wobei die Lamellen (60, 61) der Gruppe von Lamellen (60, 61) über einen Mitnehmer (70) miteinander gekoppelt sind.

6. Luftausströmer nach einem der Ansprüche 1 bis 5, wobei das rahmenförmige Luftleitelement (30) im Bereich der Schwenkachse des Bedienelements (40) eine Lagerachse (32) ausweist.

7. Luftausströmer nach Anspruch 6, wobei das Bedienelement (40) entlang seiner Schwenkachse einen ersten Lagerabschnitt (44) aufweist, über welchen das Bedienelement (40) auf der Lagerachse (32) des rahmenförmigen Luftleitelements (30) gelagert ist.

8. Luftausströmer nach einem der Ansprüche 1 bis 7, wobei das rahmenförmige Luftleitelement (30) entlang seiner Schwenkachse zweite Lagerabschnitte (34) aufweist, über welche das rahmenförmige Luftleitelement (30) im Gehäuse (12) des Luftausströmers (10) gelagert ist.

9. Luftausströmer nach einem der Ansprüche 1 bis 8, wobei das Gehäuse (12) des Luftausströmers (10) Anlageabschnitte (22) für das Bedienelement (40) aufweist.

10. Luftausströmer nach einem der Ansprüche 1 bis 9, wobei die Luftaustrittsöffnung (16) in Richtung der Schwenkachse des rahmenförmigen Luftleitelements (30) eine größere Breite aufweist als der dahinterliegende Luftkanal (14) zur Zuführung von Luft zu den Lamellen (60, 61) der Gruppe von Lamellen (60, 61) und dem rahmenförmigen Luftleitelement (30) sowie dem Bedienelement (40), und wobei die Lamellen (60, 61) der Gruppe von Lamellen (60, 61) im Luftkanal (14) angeordnet sind.

## Claims

1. Air vent with a control element (40) and a frame-shaped air guide element (30), which is mounted, in the region of the air outlet opening (16) of a housing (12) of the air vent (10), to be pivotable about its longitudinal axis, wherein
- the control element (40) is mounted in the frame-shaped air guide element (30) to be pivotable for setting the direction of exiting air,
- the control element (40) extends parallel to opposite first side walls (36) of the frame-shaped air guide element (30),
- the control element (40) extends over the opening, which is formed by the frame-shaped air guide element (30), between opposite second side walls (38), which are orthogonal to the first side walls (36), of the frame-shaped air guide element (30),
- the first side walls (36) have a greater length than the second side walls (38),
- the first side walls (36) extend parallel to the pivot axis of the frame-shaped air guide element (30),
- the pivot axis of the control element (40) extends in the frame-shaped air guide element (30) orthogonally to the pivot axis of the frame-shaped air guide element (30),
- the control element (40) is coupled with a group of slats (60, 61), the pivot axles of which extend parallel to the pivot axis of the control element (40) in the frame-shaped air guide element (30) and are pivotably mounted in the housing (12) upstream of the frame-shaped air guide element (30) in the air flow direction, and
- the control element (40) is formed as air guide element.

2. Air vent according to claim 1, wherein the control element (40) has a first coupling section (46), which projects at the rear side, with a bearing ball (48).

3. Air vent according to claim 2, wherein a slat (60) of the group of slats (60, 61) has a projecting second coupling section (66) with a bearing ball (68).

4. Air vent according to claim 3, wherein the bearing ball (48) of the first coupling section (46) is connected with the bearing ball (68) of the second coupling section (66) by way of a coupling rod (80), wherein the coupling rod (80) has at each of its opposite end sections a respective opening (82) for the bearing balls (48, 68).

5. Air vent according to any one of claims 1 to 4, wherein the slats (60, 61) of the group of slats (60, 61) are coupled together by way of an entrainer (70).

6. Air vent according to any one of claims 1 to 5, wherein the frame-shaped air guide element (30) has a bearing axle (32) in the region of the pivot axis of the control element (40).

7. Air vent according to claim 6, wherein the control element (40) has along its pivot axis a first bearing section (44) by way of which the control element (40) is mounted on the bearing axle (32) of the frame-shaped air guide element (30).

8. Air vent according to any one of claims 1 to 7, wherein the frame-shaped air guide element (30) has along its pivot axis second bearing sections (34) by way of which the frame-shaped air guide element (30) is mounted in the housing (12) of the air vent (10).

9. Air vent according to any one of claims 1 to 8, wherein the housing (12) of the air vent (10) has support sections (22) for the control element (40).

10. Air vent according to any one of claims 1 to 9, wherein the air outlet opening (16) has in the direction of the pivot axis of the frame-shaped air guide element (30) a greater width than the air channel (14), which is disposed therebehind, for the feed of air to the slats (60, 61) of the group of slats (60, 61) and the frame-shaped air guide element (30) as well as the control element (40), and wherein the slats (60, 61) of the group of slats (60, 61) are arranged in the air channel (14).

## Revendications

1. Diffuseur d'air avec un élément d'utilisation (40) et un élément de guidage d'air (30) en forme de cadre, lequel est monté de manière à pouvoir pivoter autour de son axe longitudinal dans la zone de l'ouverture de sortie d'air (16) d'un boîtier (12) du diffuseur d'air (10), dans lequel
- l'élément d'utilisation (40) est monté de manière à pouvoir pivoter dans l'élément de guidage d'air (30) en forme de cadre, en servant à régler le sens du flux d'air sortant,
- l'élément d'utilisation (40) s'étend de manière parallèle par rapport à des premières parois latérales (36) se faisant face de l'élément de guidage d'air (30) en forme de cadre,
- l'élément d'utilisation (40) s'étend au-dessus de l'ouverture formée par l'élément de guidage d'air (30) en forme de cadre, entre des deuxièmes parois latérales (38) se faisant face de manière orthogonale par rapport aux premières parois latérales (36), de l'élément de guidage d'air (30) en forme de cadre,
- les premières parois latérales (36) présentent une plus grande longueur que les deuxièmes parois latérales (38),
- les premières parois latérales (36) s'étendent de manière parallèle à l'axe de pivotement de l'élément de guidage d'air (30) en forme de cadre,
- l'axe de pivotement de l'élément d'utilisation (40) s'étend dans l'élément de guidage d'air (30) en forme de cadre de manière orthogonale par rapport à l'axe de pivotement de l'élément de guidage d'air (30) en forme de cadre,
- l'élément d'utilisation (40) est couplé à un groupe de lamelles (60, 61), dont les axes de pivotement s'étendent de manière parallèle par rapport à l'axe de pivotement de l'élément d'utilisation (40), dans l'élément de guidage d'air (30) en forme de cadre, et qui sont montées de manière à pouvoir pivoter dans le boîtier (12) en amont, dans le sens d'écoulement d'air, de l'élément de guidage d'air (30) en forme de cadre, et
- l'élément d'utilisation (40) est réalisé sous la forme d'un élément de guidage d'air.

2. Diffuseur d'air selon la revendication 1, dans lequel l'élément d'utilisation (40) présente une première section de couplage (46) faisant saillie côté arrière avec une sphère de montage (48).

3. Diffuseur d'air selon la revendication 2, dans lequel une lamelle (60) du groupe de lamelles (60, 61) présente une deuxième section de couplage (66) faisant saillie avec une sphère de montage (68).

4. Diffuseur d'air selon la revendication 3, dans lequel la sphère de montage (48) de la première section de couplage (46) est reliée à la sphère de montage (68) de la deuxième section de couplage (66) par l'intermédiaire d'une tige de couplage (80), dans lequel la tige de couplage (80) présente au niveau de ses sections d'extrémité opposées respectivement une ouverture (82) pour les sphères de montage (48, 68).

5. Diffuseur d'air selon l'une quelconque des revendications 1 à 4, dans lequel les lamelles (60, 61) du groupe de lamelles (60, 61) sont couplées les unes aux autres par l'intermédiaire d'un entraîneur (70).

6. Diffuseur d'air selon l'une quelconque des revendications 1 à 5, dans lequel l'élément de guidage d'air (30) en forme de cadre présente dans la zone de l'axe de pivotement de l'élément d'utilisation (40) un axe de montage (32).

7. Diffuseur d'air selon la revendication 6, dans lequel l'élément d'utilisation (40) présente le long de son axe de pivotement une première section de montage (44), par l'intermédiaire de laquelle l'élément d'utilisation (40) est monté sur l'axe de montage (32) de l'élément de guidage d'air (30) en forme de cadre.

8. Diffuseur d'air selon l'une quelconque des revendications 1 à 7, dans lequel l'élément de guidage d'air (30) en forme de cadre présente le long de son axe de pivotement des deuxièmes sections de montage (34), par l'intermédiaire desquelles l'élément de guidage d'air (30) en forme de cadre est monté dans le boîtier (12) du diffuseur d'air (10).

9. Diffuseur d'air selon l'une quelconque des revendications 1 à 8, dans lequel le boîtier (12) du diffuseur d'air (10) présente des sections d'appui (22) pour l'élément d'utilisation (40).

10. Diffuseur d'air selon l'une quelconque des revendications 1 à 9, dans lequel l'ouverture de sortie d'air (16) présente en direction de l'axe de pivotement de l'élément de guidage d'air (30) en forme de cadre une largeur plus grande que le canal d'air (14) situé à l'arrière servant à amener de l'air aux lamelles (60, 61) du groupe de lamelles (60, 61) et à l'élément de guidage d'air (30) en forme de cadre, ainsi qu'à l'élément d'utilisation (40), et dans lequel les lamelles (60, 61) du groupe de lamelles (60, 61) sont disposées dans le canal d'air (14).
